# EUROPÄISCHE PATENTSCHRIFT

(11) **EP 1 341 858 B1**
(45) Veröffentlichungstag und Bekanntmachung des Hinweises auf die Patenterteilung: **28.06.2006**
(21) Anmeldenummer: 01991784.8
(22) Anmeldetag: 05.12.2001
(51) Int. Cl.: C09D 161/04, C08L 61/04, C08J 5/12

(54) **WÄSSRIGE EINSCHICHT-GUMMI-METALL-BINDEMITTEL**
AQUEOUS SINGLE LAYER RUBBER-METAL BINDING AGENTS
LIANTS AQUEUX CAOUTCHOUC-METAL EN UNE SEULE COUCHE

(30) Priorität: 14.12.2000 DE 10062266
(43) Veröffentlichungstag der Anmeldung: 10.09.2003
(73) Patentinhaber: Henkel Kommanditgesellschaft auf Aktien, 40589 Düsseldorf (DE)
(72) Erfinder: WEFRINGHAUS, Rainer, 40723 Hilden (DE); PURPS, Hans-Joachim, 41564 Kaarst (DE)
(86) Internationale Anmeldenummer: PCT/EP2001/014265
(87) Internationale Veröffentlichungsnummer: WO 2002/048273

(56) Entgegenhaltungen:
- WO-A-99/02583
- US-A- 4 124 554
- US-A- 5 200 455

## Beschreibung

Die vorliegende Erfindung betrifft ein wässriges Bindemittel sowie deren Verwendung als einschichtiges Bindemittel zur Herstellung von Gummi-Metall-Bindungen.
Zum Aufvulkanisieren von Kautschukmischungen auf vulkanisationsstabile Substrate, insbesondere Metalle werden spezielle Bindemittel benötigt, um eine dauerhafte und belastbare Verbindung zwischen dem Metall und dem Kautschuk zu erzielen. Im Stand der Technik sind hierzu eine Vielzahl von zweischichtigen Systemen auf der Basis von Polymeren in organischen Lösungsmitteln bekannt. Dazu wird in der Regel zunächst ein so genannter "Primer" auf das metallische Substrat aufgetragen. Nach dessen Ablüften, und ggf. Einbrennen, erfolgt der Auftrag des eigentlichen Bindemittels, dessen Lösungsmittel ebenfalls abdunsten muß und das ggf, in einem separaten Schritt ausgehärtet werden muß, gelegentlich erfolgt dieses Aushärten gemeinsam mit dem Vulkanisationsschritt der Kautschukmischung.

Aus Gründen des Umweltschutzes sind in neuerer Zeit zunehmend Bindemittel - Systeme auf wässriger Basis vorgeschlagen worden, die frei bzw. arm an organischen flüchtigen Lösungsmitteln sind.

So beschreibt die WO 90/12847 eine wässrige Bindemitteldispersion zum Aufvulkanisieren von Kautschuk auf unter Vulkanisationsbedingungen stabile Substrate, die ein halogeniertes Copolymeres, ein alkylierend wirkendes Monoalkenyl-aromatisches Alkylhalogenid sowie mehrfunktionelle aromatische Nitrosoverbindungen, Pigmente, Russ, Entschäumer und Emulgatoren und weitere Hilfsstoffe enthält. Gemäß der Lehre dieser Schrift soll die Bindefestigkeit zwischen dem Substrat und dem aufvulkanisierten Kautschuk verbessert werden und auf verkappte Isocyanate verzichtet werden.
Gemäß der Lehre dieser Schrift ist es zweckmäßig, vor dem Auftrag des Bindemittels eine Vorbehandlung mit einem haftverbessernden Mittel (Primer) aus chloriertem Kautschuk, Phenolharz oder dergleichen durchzuführen. Ein einschichtiges, wässriges Bindemittelsystem, das frei von Halogenverbindungen ist, wird in dieser Schrift nicht vorgeschlagen.

Aus US-A-5200455 ist eine wässrige Primer-Zusammensetzung bekannt, die eine Polyvinylalkohol-stabilisierte wässrige Phenolharzdispersion und einen Latex eines halogenierten Polyolefins und Metalloxid enthält. Diese wässrige Primer - Zusammensetzung reduziert zwar die Verwendung von organischen Lösungsmitteln, sie sind jedoch nach wie vor als Lösungsvermittler notwendig. Weiterhin ist gemäß der Lehre dieser Schrift zur Erzielung einer dauerhaften klebenden Verbindung noch die Anwendung einer Deckschicht auf diese Primerschicht notwendig.

Aus der WO 96/38510 ist ein adhesives Mittel auf wässriger Basis bekannt, das eine wässrige Dispersion eines oder mehrerer Phenolharze enthält, die durch ein oder mehrere Polyacrylate stabilisiert ist. Weiterhin enthält dieses Mittel einen oder mehrere Latices halogenierter Polyolefine und einen oder mehrere Vernetzer. Dieses adhesive Mittel wird als Primer auf die Substrate aufgetragen, woran sich die Beschichtung mit einem bekannten Cover-Zement anschließen soll und das Substrat anschließend unter Vulkanisationsbedingungen mit einem Kautschuk verbunden wird.

Im Stand der Technik sind also weder einschichtig zu applizierende Bindemittel auf wässriger Basis bekannt, noch sind diese frei von Halogenverbindungen, so daß sich die Erfinder die Aufgabe gestellt haben, ein einschichtig zu applizierendes Gummi-Metall-Bindemittel auf wässriger Basis bereitzustellen, das frei von halogenhaltigen Polymeren oder halogenhaltigen Alkylierungsmitteln ist und arm an flüchtigen organischen Lösungsmitteln oder vorzugsweise frei von organischen Lösungsmitteln ist.

Die erfindungsgemäße Lösung der Aufgabe ist den Patentansprüchen zu entnehmen. Sie besteht im wesentlichen in der Bereitstellung eines wässrigen Bindemittels, das mindestens ein Phenolharz, eine mehrfunktionelle aromatische Nitrosoverbindung sowie Polyvinylalkohol enthält.

Ein weiterer Gegenstand der vorliegenden Erfindung ist die Verwendung einer derartigen Zusammensetzung als primerlos zu applizierendes einschichtiges Gummi-Metall-Bindemittel.

Ein weiterer Gegenstand der vorliegenden Erfindung betrifft ein Verfahren zur Herstellung einer Gummi-Metallbindung mit den folgenden wesentlichen Verfahrensschritten:
a) Aufbringen der vorgenannten Bindemittel-Zusammensetzung auf ein metallisches Substrat,
b) Trocknen und / oder Aushärten der Beschichtung zur Erzielung einer Trockenfilmstärke der Bindemittelschicht von 1 bis 8 µm, wozu das beschichtete Substrat ggf. auf Temperaturen zwischen 60 und 150 °C erwärmt wird,
c) anschließend wird das beschichtete Substrat auf vorkonfektionierte Dimensionen zugeschnitten und umgeformt, beispielsweise zur Herstellung eines U-förmigen Profils,
d) anschließend wird in herkömmlicher Art eine Kautschukmischung, ggf. unter Formgebung für das endgültige Kautschukprofil, auf das mit dem Bindemittel beschichtete Metallteil extrudiert, woran sich
e) die Vulkanisation der Kautschukmischung, ggf. unter gleichzeitiger endgültiger Aushärtung der Bindemittelschicht, anschließt.

Bei dieser Art des Herstellungsverfahrens wird das Bindemittel vorzugsweise direkt im Coil-Coating-Verfahren auf das metallische Substrat aufgebracht.

Da das erfindungsgemäße wässrige Bindemittel einstufig auf das metallische Substrat aufgebracht werden kann und beim Austrocknen keine bzw. nur sehr wenige organische Lösungsmittel frei werden, kann die Beschichtung des metallischen Substrates auch auf einfachen Anlagen zu einem späteren Zeitpunkt aufgebracht werden. Hierzu kann das metallische Substrat zunächst geschnitten werden und anschließend mit der Bindemittelschicht beschichtet werden, woran sich nach dem Trocknen und/oder Aushärten der Bindemittelschicht der Umformungsprozeß sowie die Extrusion der Kautschukmischung und der Vulkanisationsschritt anschließen. Ein Vorteil dieser Vorgehensweise ist es, daß in diesem Fall auch die Schnittkanten des metallischen Substrates mit dem Bindemittel beschichtet werden.

Die bevorzugten erfindungsgemäßen Bindemittel enthalten:
- 2 bis 10 Gew. %, vorzugsweise 2 bis 8 Gew.%, Poly-p-Dinitrosobenzol,
- 4 bis 15 Gew.% Phenolharz,
- 2 bis 10 Gew.%, vorzugsweise 2 bis 8 Gew.%, Polyvinylalkohol,
- ggf. bis zu 15 Gew.% eines wasserlöslichen Lösungsmittels als Löslichkeitsvermittler,
- 0,5 bis 5 Gew.% eines Metallsalzes oder Metalloxides ausgewählt aus Zinkoxid, Magnesiumoxid, Zinkoctoat, Zinkstearat oder deren Mischungen,
- 0,5 bis 5 Gew.% eines oder mehrerer Füllstoffe oder Pigmente ausgewählt aus Bariumsulfat, Eisenoxid, Russ, Calciumcarbonat oder deren Mischungen,
- 91 bis 40 Gew. % Wasser.

Als Phenolharz werden dabei die an sich bekannten Kondensationsprodukte von Phenolen mit Formaldehyd verwendet, wobei das Phenolharz ein Resol und / oder Novolak - Harz ist und ggf. durch Mitverwendung von alkylierten Phenolen hydrophob eingestellt ist. Diese Phenolharze sind entweder flüssig und hochviskos, sie können jedoch auch in Form ihrer hochkonzentrierten wässrigen Lösungen eingesetzt werden oder ggf. in geringen Mengen von mit Wasser mischbaren Lösungsmitteln wie niederen Alkylalkoholen, niederen Ketonen und dergleichen gelöst werden.

Ein weiterer wichtiger Bestandteil der erfindungsgemäßen Bindemittel sind aromatische Nitrosoverbindungen. Geeignete aromatische Nitrosoverbindungen enthalten mindestens 2 Nitrosogruppen pro aromatischen Ring. So eignen sich beispielsweise m- und p-Dinitrosobenzol, die Dinitrosoverbindungen des Naphtalins, Antracens oder Diphenyls. Die aromatische Kerne können dabei weitere Substituenten ausgewählt aus Alkyl-, Alkoxy-, Cycloalkyl-, Aryl-, Arylnitroso- und dergleichen Gruppen enthalten. Als konkrete Verbindungen seien beispielhaft erwähnt: m-Dinitrosobenzol, p-Dinitrosobenzol, m-Dinitrosonaphtalin, p-Dinitosonaphtalin, 2,5-Dinitroso-p-cumol, 2-Methyl-1,4-dinitrosobenzol, 2-Methyl-5-chloro-1,4-dinitrosobenzol, 2-Fluoro-1,4-dinitrosobenzol, 2-Methoxy-1,3-dinitrosobenzol, 5-Chloro-1,3-Dinitrosobenzol, 2-Benzyl-1,4-dinitrosobenzol und 2-Cyclohexyl-1,4-dinitrosobenzol. Ganz besonders bevorzugt ist das p-Dinitrosobenzol, das bekanntlich in oligomerer oder polymerer Form vorliegt. Ein besonders vorteilhaftes Herstellverfahren für das Poly-p-Dinitrosobenzol durch Oxidation von p-Benzochinon-Dioxim in situ mit einem Alkalijodid und Wasserstoffperoxid wird in der WO 00/375539 genannt.

Ein weiterer wesentlicher Bestandteil der erfindungsgemäßen wässrigen Bindemittel sind Polyvinylalkohole, die bekanntlich durch Hydrolyse von Homo-oder Copolymeren des Vinylacetats hergestellt werden. Dabei kann der prozentuelle Anteil der Hydroxylgruppen des Polyvinylalkohols, bezogen auf die ursprünglich vorhandenen Acetatgruppen, zwischen 40 und 99 % betragen, besonders bevorzugt sind Verseifungsgrade zwischen 75 und 90 %. Neben den besonders bevorzugten Verseifungsprodukten von Polyvinylacetat können auch Verseifungsprodukte von Copolymeren des Polyvinylacetates mit Vinylbutyrat, Ethylen-Vinylchlorid-Copolymeren, Vinylacetat-Acrylsäureester-Copolymeren sowie Ethylen-Vinylacetat-Copolymeren (EVA) eingesetzt werden. Bei den genannten Copolymeren sollte der Vinylacetatanteil in mol% des gesamt Copolymeren mehr als 30 mol%, vorzugsweise mehr als 50 mol % und insbesondere mehr als 70 mol % betragen. Auch für derartige Polyvinylalkohol-Copolymere gelten die oben genannten Hydrolysegrade in Bezug auf die ursprünglich vorhandenen Vinylacetatgruppen. Die Polyvinylalkohole haben dabei ein Mol-Gewicht zwischen 14 000 und 100 000, die Höhe des Mol-Gewichts für das erzielte Haftungsergebnis ist nur von untergeordneter Bedeutung. Durch das Mol-Gewicht des Polyvinylalkohols bzw. durch den Hydrolysegrad kann die Viskosität der gesamten Bindemittel-Zusammensetzung beeinflußt werden, und damit die Verarbeitungseigenschaften gesteuert werden. Dabei führen ein hohes Molekulargewicht sowie ein hoher Hydrolysegrad zu hochviskosen Zusammensetzungen, ein niederes Molekulargewicht und ein niedriger Hydrolysegrad zu einer niedrigen Viskosität.

Es kann notwendig sein, insbesondere das Phenolharz in wasserlöslichen organischen Lösungsmitteln aufzunehmen, um eine homogene Bindemitteldispersion bzw. Lösung zu erhalten. Als wasserlösliche Lösungsmittel eignen sich insbesondere Alkylalkohole mit bis zu 3 Kohlenstoffatomen insbesondere Ethanol oder niedere Ketone wie Aceton, Methylethylketon und dergleichen.

Die erfindungsgemäßen Bindemittel-Zusammensetzungen können weiterhin noch übliche haftverbessernde Füllstoffe enthalten, es kommen hier insbesondere Ruß in Mengen von 0,5 bis 5 Gew.% oder Metalloxide wie Zinkoxid, Magnesiumoxid oder Metallsalze wie Zinkoctoat oder Zinkstearat in Mengen von 0,5 bis 5 Gew. % in Frage. Weiterhin können weitere Pigmente oder Füllstoffe, ausgewählt aus Bariumsulfat, Eisenoxid, Calciumcarbonat oder deren Mischungen eingearbeitet werden. Die erfindungsgemäßen wässrigen Bindemittel eignen sich als einschichtiger Auftrag auf metallische Substrate wie Eisen, rostfreier Stahl, Blei, Aluminium, Kupfer, Messing, Bronze, Monel-Metalle, Nickel, Zink sowie für vorbehandelte Metalle wie phosphatierten oder galvanisierten Stahl zum Verbinden mit gängigen vulkanisierbaren Elastomeren, insbesondere EPDM - Kautschuken.

Die Bindemittel werden auf die Substratoberflächen in konventioneller Weise, etwa durch Eintauchen, Aufsprühen, Aufbürsten und dergleichen aufgetragen. Die Substratoberflächen werden nach dem Beschichten getrocknet, die zu vulkanisierende Kautschukmischung aufgetragen, anschließend werden die so hergestellten Verbundstrukturen in konventioneller Weise erhitzt, um die Vulkanisation des Kautschuks herbeizuführen.

Die erfindungsgemäßen Bindemittel weisen gegenüber den Bindemittel-Systemen des Standes der Technik die folgenden Vorteile auf:
- wegen des einschichtigen Auftrags ist eine bessere Prozesskontrolle möglich, die Verbundsysteme weisen weniger fehlerbehaftete Variabilität auf,
- die Bindefähigkeit der Beschichtung zum aufvulkanisierten Elastomer ist auch nach langer Zwischenlagerung des beschichteten Metalls noch ausgezeichnet, es wird vermutet, das dies unter anderem damit zusammenhängt, daß die haftungsaktiven Substanzen wie die Nitroso-aromatischen Verbindungen konstant in der Bindemittelschicht bleiben und nicht in die Primerschicht und /oder an die Grenzflächen auswandern können,
- das Bindemittel-System kann auch auf vorkonfektionierten Metallsubstraten aufgetragen werden, weil der Auftrag durch seine einstufige Führung und die Abwesenheit großer Mengen an flüchtigen organischen Lösungsmitteln die Auftragsanlagen einfacher gestaltet, so daß auch andere Applikationen als direkt auf das Coil möglich sind,
- dies führt unter anderem dazu, daß bei vorkonfektionierten Metallsubstraten auch die Randbereiche mitbeschichtet werden können,
- dadurch wird die Gesamtapplikation des Gummi-Metall-Bindemittels kostengünstiger als bei den Verfahren nach dem Stand der Technik.

Der auf das Substrate aufextrudierte Kautschuk kann nach den herkömmlichen Methoden vulkanisiert werden, z.B. durch UHF (Ultrahochfrequenz) - Heizung, IR - Heizung, konventionelle Ofenheizung oder Kombination der drei Verfahren.

Nachfolgend soll die Erfindung an Hand einiger konkreter Ausführungsbeispiele näher erläutert werden, wobei die Auswahl der Beispiele keine Beschränkung des Umfanges des Erfindungsgegenstandes darstellen soll, sie zeigen nur in modellhafter Weise die Wirkungsweise der erfindungsgemäß einzusetzenden einschichtigen Bindemittel.

### Beispiel

Aus den folgenden Bestandteilen wurde ein wässriges Bindemittel hergestellt:
- Poly-p-dinitrosobenzol 5 Gew.%,
- Phenolharz Bakelite KP 781 (Fa. Bakelite) 10 Gew.%,
- Ethanol 10 Gew.%,
- Polyvinylalkohol Mowiol 18/88 (Fa. Clariant) 5 Gew.% ,
- Russ Elftex 125 (Fa. Cabot) 3 Gew.%,
- Zinkoxid Hansa extra (Lehmann & Voss) 3 Gew.%,
- Wasser 64 Gew.%

Das Phenolharz wurde 50 %ig in Ethanol gelöst, der Polyvinylalkohol wurde 10 %ig in Wasser gelöst, anschließend wurden die übrigen Bestandteile unter Rühren hinzu gegeben und danach in einer Perl-Mühle bis zur Erreichung einer Korngröße < 50 µm gemahlen.

Stahlblech wurde mit der Bindemittel - Zusammensetzung beschichtet und getrocknet, anschließend wurde eine EPDM - Mischung, wie sie beispielsweise in der WO 90/12847 auf Seite 24 aufgeführt ist, aufgetragen, anschließend wurde die Vulkanisation drucklos für 5 min. bei 180 °C durchgeführt.

Die aufvulkanisierte Gummi-Mischung zeigte eine sehr gute Trockenhaftung und einen Reißwert von > 30 daN/in mit einem Materialbruch im Gummi. Das Rissbild war 100% R; nach dem Kochendwassertest war das Rissbild ≥ 90% R, d.h. der Bruch erfolgte in erwünschter Weise zu 100% bzw. ≥ 90% im Gummi. Diese Messungen wurden nach der ASTM D 429, Methode D durchgeführt.
Beschichtete Metallteile konnten mehr als 12 Wochen bei Raumtemperatur zwischengelagert werden, bevor eine Kautschukmischung aufvulkanisiert wurde. Auch so hergestellte Verbund-Systeme zeigten das gleiche positive Ergebnis wie bei frisch beschichten Substraten.

## Patentansprüche

1. Wässriges Bindemittel enthaltend
- mindestens ein Phenolharz
- eine oder mehrere mehrfunktionelle aromatische Nitrosoverbindung
- Polyvinylalkohol,
**dadurch gekennzeichnet, dass** es frei ist von halogenhaltigen Polymeren oder halogenhaltigen Alkylierungsmitteln.

2. Wässriges Bindemittel nach Anspruch 1 **dadurch gekennzeichnet, daß** es zusätzlich Metallsalze oder Metalloxide und/oder Füllstoffe und/oder Pigmente enthält.

3. Wässriges Bindemittel nach Anspruch 1 oder 2 **dadurch gekennzeichnet, daß** die mehrfunktionelle aromatische Nitrosoverbindung ausgewählt wird aus 1,3- bzw. 1,4-Dinitrosobenzol, m-Dinitrosonaphthalin, p-Dinitrosonaphthalin oder deren Oligomeren oder Polymeren.

4. Wässriges Bindemittel nach Anspruch 1 bis 3 enthaltend
- 4 bis 15 Gew.% Phenolharz,
- 2 bis 10 Gew.% mehrfunktionelle aromatische Nitrosoverbindung,
- 2 bis 10 Gew.% Polyvinylalkohol,
- 0 bis 15 Gew.% eines wasserlöslichen Lösungsmittels als Löslichkeitsvermittler,
- 0,5 bis 5 Gew.% eines Metallsalzes oder Metalloxids ausgewählt aus Zinkoxid, Magnesiumoxid, Zinkoctat, Zinkstearat oder deren Mischungen,
- 0,5 bis 5 Gew.% eines oder mehrerer Füllstoffe oder Pigmente ausgewählt aus Bariumsulfat, Eisenoxid, Ruß, Calciumcarbonat oder deren Mischungen,
- 91 bis 40 Gew.% Wasser.

5. Verwendung einer Zusammensetzung nach mindestens einem der vorhergehenden Ansprüche als primerloses einschichtiges Gummi-Metall-Bindemittel.

6. Verfahren zur Herstellung einer Gummi-Metallbindung **gekennzeichnet durch** die folgenden wesentlichen Verfahrensschritte
a) Aufbringen einer Zusammensetzung nach mindestens einem der vorhergehenden Ansprüche auf ein Stahlblech oder Aluminiumblech,
b) Trocknen und / oder Aushärten der Beschichtung zur Erzielung einer Trockenfilmstärke der Bindemittelschicht von 1 bis 8 µm, ggf unter Erwärmen auf Temperaturen von 60° C bis 150° C,
c) Schneiden und Umformen des beschichteten Metalls,
d) Extrusion einer Kautschukmischung ggf. unter Formgebung auf das mit Bindemittel beschichtete Metallteil,
e) Vulkanisieren der Kautschukmischung, ggf. unter gleichzeitiger endgültiger Aushärtung der Bindemittelschicht.

7. Verfahren zur Herstellung einer Gummi-Metallbindung **gekennzeichnet durch** die folgenden wesentlichen Verfahrensschritte
a) Schneiden des beschichteten Metalls,
b) Aufbringen einer Zusammensetzung nach mindestens einem der vorhergehenden Ansprüche auf ein Stahlblech oder Aluminiumblech,
c) Trocknen und / oder Aushärten der Beschichtung zur Erzielung einer Trockenfilmstärke der Bindemittelschicht von 1 bis 8 µm, ggf. unter Erwärmen auf Temperaturen von 60° C bis 150° C,
d) Umformen des beschichteten Metalls,
e) Extrusion einer Kautschukmischung ggf. unter Formgebung auf das mit Bindemittel beschichtete Metallteil,
f) Vulkanisieren der Kautschukmischung, ggf. unter gleichzeitiger endgültiger Aushärtung der Bindemittelschicht.

8. Verfahren zur Herstellung eines mit Gummi-Metallbindemittel beschichteten Metall-Coil durch die folgenden wesentlichen Verfahrensschritte **gekennzeichnet**
a) Aufbringen einer Zusammensetzung nach mindestens einem der vorhergehenden Ansprüche auf ein Stahlcoil oder Aluminiumcoil
b) Trocknen und / oder Aushärten der Beschichtung zur Erzielung einer Trockenfilmstärke der Bindemittelschicht von 1 bis 8 µm, unter Erwärmen auf Temperaturen von 60° C bis 150° C

## Claims

1. Aqueous bonding agent containing
- at least one phenolic resin
- one or more polyfunctional aromatic nitroso compounds
- polyvinyl alcohol
**characterized in that** it is free from halogen-containing polymers or halogen-containing alkylating agents.

2. Aqueous bonding agent according to claim 1, **characterized in that** it additionally contains metal salts or metal oxides and/or fillers and/or pigments.

3. Aqueous bonding agent according to claim 1 or 2, **characterized in that** the polyfunctional aromatic nitroso compound is selected from 1,3- or 1,4-dinitrosobenzene, m-dinitrosonaphthalene, p-dinitrosonaphthalene or the oligomers or polymers thereof.

4. Aqueous bonding agent according to claims 1 to 3 containing
- 4 to 15 wt.% phenolic resin,
- 2 to 10 wt.% polyfunctional aromatic nitroso compound
- 2 to 10 wt.% polyvinyl alcohol,
- 0 to 15 wt.% of a water-soluble solvent as solubilizer,
- 0.5 to 5 wt.% of a metal salt or metal oxide selected from zinc oxide, magnesium oxide, zinc octoate, zinc stearate or mixtures thereof,
- 0.5 to 5 wt.% of one or more fillers or pigments selected from barium sulfate, iron oxide, carbon black, calcium carbonate or mixtures thereof,
- 91 to 40 wt.% water.

5. Use of a composition according to at least one of the above claims as a primerless one-coat rubber-metal bonding agent.

6. Process for the production of a rubber-metal bond **characterized by** the following essential process steps
a) application of a composition according to at least one of the above claims on to a steel sheet or aluminum sheet,
b) drying and/or curing of the coating to achieve a dry film thickness of the bonding agent layer of 1 to 8 µm, optionally heating to temperatures of 60°C to 150°C,
c) cutting and shaping the coated metal,
d) extrusion of a rubber mixture, with optional shaping, on to the metal part coated with bonding agent,
e) vulcanization of the rubber mixture, optionally with simultaneous final curing of the bonding agent layer.

7. Process for the production of a rubber-metal bond **characterized by** the following essential process steps
a) cutting of the coated metal,
b) application of a composition according to at least one of the above claims on to a steel sheet or aluminum sheet,
c) drying and/or curing of the coating to achieve a dry film thickness of the bonding agent layer of 1 to 8 µm, optionally heating to temperatures of 60°C to 150°C,
d) shaping the coated metal,
e) extrusion of a rubber mixture, with optional shaping, on to the metal part coated with bonding agent,
f) vulcanization of the rubber mixture, optionally with simultaneous final curing of the bonding agent layer.

8. Process for the production of a metal coil coated with rubber-metal bonding agent **characterized by** the following essential process steps
a) application of a composition according to at least one of the above claims on to a steel coil or aluminum coil
b) drying and/or curing of the coating to achieve a dry film thickness of the bonding agent layer of 1 to 8 µm, heating to temperatures of 60°C to 150°C.

## Revendications

1. Liant aqueux contenant
- au moins une résine phénolique
- un ou plusieurs composés nitroso aromatiques polyfonctionnels
- un alcool polyvinylique,
**caractérisé en ce qu'**il est dépourvu de polymères contenant des halogènes ou d'agents alkylants contenant des halogènes.

2. Liant aqueux selon la revendication 1, **caractérisé en ce qu'**il contient en outre des sels métalliques ou des oxydes métalliques et/ou des charges et/ou des pigments.

3. Liant aqueux selon la revendication 1 ou 2, **caractérisé en ce que** le composé nitroso aromatique polyfonctionnel est choisi parmi le 1,3-, respectivement le 1,4-dinitrosobenzène, le m-dinitrosonaphtalène, le p-dinitrosonaphtalène ou leurs oligomères ou polymères.

4. Liant aqueux selon les revendications 1 à 3 contenant
- de 4 à 15 % en poids de résine phénolique,
- de 2 à 10 % en poids de composé nitroso aromatique polyfonctionnel,
- de 2 à 10 % en poids d'alcool polyvinylique,
- de 0 à 15 % en poids d'un solvant soluble dans l'eau comme tiers solvant,
- de 0,5 à 5 % en poids d'un sel métallique ou d'un oxyde métallique choisi parmi l'oxyde de zinc, l'oxyde de magnésium, l'octoate de zinc, le stéarate de zinc ou leurs mélanges,
- de 0,5 à 5 % en poids d'un(e) ou plusieurs charges ou pigments choisi(e)s parmi le sulfate de baryum, l'oxyde de fer, le noir de fumée, le carbonate de calcium ou leurs mélanges,
- de 91 à 40 % en poids d'eau.

5. Utilisation d'une composition selon au moins une des revendications précédentes comme liant caoutchouc-métal monocouche sans apprêt.

6. Procédé de production d'une liaison caoutchouc-métal, **caractérisé par** les étapes opératoires essentielles suivantes :
a) dépôt d'une composition selon au moins une des revendications précédentes sur une tôle d'acier ou une tôle d'aluminium,
b) séchage et/ou durcissement du revêtement pour produire une épaisseur de pellicule sèche de la couche de liant de 1 à 8 µm, le cas échéant en chauffant à des températures de 60 °C à 150 °C,
c) découpe et formage du métal revêtu,
d) extrusion d'un mélange de caoutchouc, le cas échéant avec façonnage sur la pièce métallique revêtue de liant,
e) vulcanisation du mélange de caoutchouc, le cas échéant avec durcissement final simultané de la couche de liant.

7. Procédé de production d'une liaison caoutchouc-métal, **caractérisé par** les étapes opératoires essentielles suivantes :
a) découpe du métal revêtu,
b) dépôt d'une composition selon au moins une des revendications précédentes sur une tôle d'acier ou une tôle d'aluminium,
c) séchage et/ou durcissement du revêtement pour produire une épaisseur de pellicule sèche de 1 à 8 µm, le cas échéant en chauffant à des températures de 60 °C à 150 °C,
d) formage du métal revêtu,
e) extrusion d'un mélange de caoutchouc, le cas échéant avec façonnage sur la pièce métallique recouverte de liant,
f) vulcanisation du mélange de caoutchouc, le cas échéant avec durcissement final simultané de la couche de liant.

8. Procédé de fabrication d'un rouleau de métal recouvert d'un liant caoutchouc-métal, **caractérisé par** les étapes opératoires essentielles suivantes :
a) dépôt d'une composition selon au moins une des revendications précédentes sur un rouleau d'acier ou un rouleau d'aluminium,
b) séchage et/ou durcissement du revêtement pour produire une épaisseur de pellicule sèche de la couche de liant de 1 à 8 µm, en chauffant à des températures de 60 °C à 150 °C.
